(19) Europäisches Patentamt European Patent Office Office européen des brevets

(11) **EP 4 475 155 A1**

(12) **EUROPEAN PATENT APPLICATION**
published in accordance with Art. 153(4) EPC

(43) Date of publication:
**11.12.2024 Bulletin 2024/50**

(21) Application number: **23770228.7**

(22) Date of filing: **15.02.2023**

(51) International Patent Classification (IPC):
*H01G 9/10* (2006.01)    *H01G 2/10* (2006.01)

(52) Cooperative Patent Classification (CPC):
**H01G 2/10; H01G 9/10**

(86) International application number:
**PCT/JP2023/005296**

(87) International publication number:
**WO 2023/176268 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.03.2022   JP 2022042966**

(71) Applicant: **Nippon Chemi-Con Corporation Tokyo 141-8605 (JP)**

(72) Inventors:
• **MAEDA, Tetsuo**
  **Tokyo 141-8605 (JP)**
• **TAKAHASHI, Hideaki**
  **Tokyo 141-8605 (JP)**

(74) Representative: **AWA Sweden AB**
  **Matrosgatan 1**
  **Box 5117**
  **200 71 Malmö (SE)**

(54) **SEALING BODY AND ELECTROLYTIC CAPACITOR**

(57)    The present disclosure provides a sealing body that can suppress thermal oxidative deterioration, and an electrolytic capacitor including the sealing body. The sealing body seals an opening of a casing housing a capacitor element in which anode foil and cathode foil with dielectric oxide film facing each other and which is impregnated with electrolytic solution. For example, the sealing body includes an elastomer member containing an elastomer such as butyl rubber. The initial cross-linking density of the elastomer is $1.8 \times 10^{-3}$ mol/g or more and the content of the elastomer relative to a total of the elastomer member is 30 wt% or less.

Fig. 2

EP 4 475 155 A1

**Description**

FIELD OF INVENTION

The present disclosure relates to a sealing body sealing a casing of an electrolytic capacitor and an electrolytic capacitor including the sealing body.

BACKGROUND

Electrolytic capacitors include valve action metal, such as tantalum or aluminum, as anode foil and cathode foil. A surface of the anode foil is enlarged by making the valve action metal into a sintered body or a shape such as etching foil, and the enlarged surface has dielectric oxide film thereon. Electrolytic solution intervenes between the anode foil and the cathode foil. The electrolytic solution closely contacts with the uneven surface of the anode foil and acts as a true cathode. This electrolytic capacitor obtains anode-side capacity by dielectric polarization action of the dielectric oxide film.

In this electrolytic capacitor, a capacitor element formed by filling the electrolytic solution between the anode foil and the cathode foil is sealed using a casing and a sealing body to suppress transpiration of the electrolytic solution formed by adding an electrolyte (refer Patent Document 1). The sealing body is a member to seal an opening of the bottomed casing in which the capacitor element is housed. This sealing body adheres to the opening of the casing by a press-fitting process and is formed by an elastic member of appropriate hardness to improve sealing performance. For example, the sealing body includes an elastomer member such as butyl rubber. The elastomer member is produced by vulcanization to cause cross-linking reaction.

The electrolytic capacitor is expected to be used under high-temperature environment such as in-vehicle application. Under the high-temperature environment, the sealing body may thermally oxidatively deteriorates on the outer side of the casing. That is, the C-H bond of the elastomer molecule cleaves, and radicals are produced. Firstly, the radical attacks other C-H bonds of the elastomer molecule and facilitates further cleavage. Secondly, oxygen is added to the radical, and peroxides are produced. The peroxide is degraded by heat and produces radicals at an accelerated rate, and this radical attacks other C-H bonds of the elastomer molecules and facilitate further cleavage.

When this is repeated, the length of the chain of the elastomer molecule becomes shorter, and the elastomer member becomes softer. The elastomer with low molecular weight easily vaporizes. Furthermore, when the elastomer with short chain recombines, the density of the elastomer increases. Therefore, the elastomer member shrinks. The shrinking of the elastomer member is significant on the outer side of the casing where is exposed to heat and oxygen, the degree of the shrinking decreases from the outer side to the inner side of the casing.

Meanwhile, the swelling of the elastomer occurs due to the electrolytic solution on the internal side of the casing. Then, the shrunk portion and swelled portion are produced inside the sealing body, forming a crack in the elastomer member of the sealing body. When the sealing body cracks, leakage of the electrolytic solution, an increase in the transpiration of the electrolytic solution, and contamination such as moisture to the electrolytic capacitor easily occur, such that the lifetime of the electrolytic capacitor becomes short.

Therefore, like the Patent Document 1, a sealing body in which fluorine resin is laminated on a surface of an elastomer member at electrolytic-solution side in addition to the elastomer member has been proposed. Furthermore, like the Patent Document 2, the cross-linking density of an elastomer of 0.5 to 10 mol/cm$^{-3} \times 10^{-4}$ has been proposed.

PRIOR ART DOCUMENT

PATENT DOCUMENT

   Patent Document 1: JP S59-80925 A
   Patent Document 2: JP H05-283302 A

SUMMARY OF INVENTION

PROBLEMS TO BE SOLVED BY INVENTION

The proposal of the Patent Document 1 is to suppress the swelling of the elastomer member by reducing the chance for the electrolytic solution and the elastomer member to contact with each other inside the casing of the sealing body by using resin. Furthermore, the proposal of the Patent document 2 is to keep the elasticity of the elastomer member even under thermal oxidative deterioration by reducing the cross-linking density. These proposals of the Patent Documents 1 and 2 are in the premise of the thermal oxidative deterioration and does not suppress the thermal oxidative deterioration.

The present disclosure has been proposed to solve the above problems, and an objective is to provide a sealing body that can suppress the thermal oxidative deterioration, and an electrolytic capacitor including the sealing body.

MEANS TO SOLVE THE PROBLEM

To address the above problem, a sealing body of the present disclosure includes an elastomer member containing an elastomer, in which an initial cross-linking density of the elastomer is $1.8 \times 10^{-3}$ mol/g or more, and a content of the elastomer relative to a total of the elastomer member is 30 wt% or less.

When the initial cross-linking density is $1.8 \times 10^{-3}$ mol/g or more, the cross-linking suppresses the vibration of the elastomer due to thermal energy, and it becomes difficult for the elastomer to cleave. That is, the elastomer member less softens. However, the cross-linking density decreases over time. Meanwhile, when the content of the elastomer relative to a total of the elastomer member is 30 wt% or less, the decrease in the cross-linking density is suppressed. By this, the cleavage of the elastomer is suppressed for a long time. Then, since the cleavage of the elastomer is suppressed for a long time, the degree of vaporization and recombination of the elastomer is reduced, and the shrinking of the elastomer member becomes slower. That is, the thermal oxidative deterioration can be suppressed for a long time.

The initial cross-linking density of the elastomer may be $2.5 \times 10^{-3}$ mol/g or more. When the initial cross-linking density is $2.5 \times 10^{-3}$ mol/g or more, the strong cross-linking density suppress the reduction in the cross-linking density, and together with the reduction suppression effect for the cross-linking density of the content of the elastomer relative to the total of the elastomer member that is 30 wt% or less, further suppresses the cleavage of the elastomer, and the shrinking of the elastomer member becomes further slower. That is, the thermal oxidative deterioration can be further suppressed for a long time.

The elastomer member may further contain carbon and an inorganic filler. The interaction between the elastomer and the carbon or inorganic filler too expresses the reduction suppression effect for the cross-linking. The inorganic filler may include a flat inorganic filler. The flat inorganic filler may be talc, mica, or both. The flat inorganic filler further improves the reduction suppression effect for the cross-linking due to the interaction with the elastomer.

The elastomer may be resin cross-linked. The resin cross-linking is strong among the cross-linking of the elastomer, and the strong cross-linking suppress the reduction in the cross-linking density

The elastomer may be butyl rubber. Butyl rubber has higher heat resistance than other elastomers, making it difficult to oxidatively deteriorate, and butyl rubber is non-polar while an organic solvent used for electrolytic solution is polar. Therefore, butyl rubber less swell than other elastomers due to the electrolytic solution. Then, when the elastomer is butyl rubber, it is difficult for the difference between the volume of the sealing body on the outer side of the casing shrinking by thermal oxidative deterioration and the volume of the sealing body on the inner side of the casing to occur. Thus, the cracks less likely occur in the sealing body.

The change rate of the cross-linking density when exposed under the temperature environment of 150 °C for 500 hours may be within -60% relative to the initial cross-linking density. By this, the change in hardness when exposed under the temperature environment of 150 °C for 1000 hours may be within -2 relative to the initial hardness. When the change in hardness is within -2, the shrinking of the sealing body becomes slower.

An electrolytic capacitor including the sealing body, a casing sealed by the sealing body, and a capacitor element which is housed in the casing, has anode foil and cathode foil with dielectric oxide film facing each other, and is impregnated with electrolytic solution is also an aspect of the present disclosure.

When the shrinking of the sealing body is slow and the thermal oxidative deterioration of the sealing body is suppressed for a long time, transpiration of the electrolytic solution to the outside of the electrolytic capacitor through the sealing body is suppressed. Therefore, the deterioration over time of the capacitance of the electrolytic capacitor and the dissipation factor (tan δ) is reduced. Thus, long lifetime of the electrolytic capacitor is achieved.

The electrolytic capacitor may further include a solid electrolyte layer containing a conductive polymer and formed in the capacitor element.

The reduction suppression effect for the cross-linking density makes the shrinking of the elastomer member slow, suppress the thermal oxidative deterioration for a long time, and prevents oxygen from entering into the electrolytic capacitor from the outside. Therefore, the oxidative deterioration of the conductive polymer of the electrolytic capacitor is suppressed, in addition to the thermal oxidative deterioration of the sealing body/ By this, the deterioration over time of the capacitance and the dissipation factor (tan δ) due to the oxidative deterioration of the conductive polymer is reduced. Thus, long lifetime of the electrolytic capacitor including the electrolytic solution and the solid electrolyte layer is achieved.

EFFECT OF INVENTION

According to the present disclosure, the thermal oxidative deterioration of the sealing body can be suppressed.

BRIEF DESCRIPTION OF DRAWINGS

Fig. 1 is a graph indicating the time change in the hardness of the sealing body.
Fig. 2 is a graph indicating the time change in the thermal shrinkage of the sealing body.

EMBODIMENTS

Hereinafter, a sealing body and an electrolytic capacitor according to embodiments of the present disclosure will be described. Note that the present disclosure is not limited to the following embodiments.

(Summary of Electrolytic Capacitor)

Electrolytic capacitors are passive elements that store and discharge electric charges according to capacitance. The capacitor element of the electrolytic capacitor includes anode foil, cathode foil, a separator, and electrolytic solution, and has a wound-shape or a laminated-shape. Dielectric oxide film is formed on a surface of the anode foil. The anode foil and the cathode foil face each other via the separator. The electrolytic solution is filled into voids of the capacitor element, closely contacts with the dielectric oxide film, and acts as true cathode. An electrolyte of the electrolytic capacitor may contain only electrolytic solution or may contain electrolytic solution and a solid electrolyte together. Furthermore, the electrolytic solution may be kept in liquid form or may be gelated.

The capacitor element is housed in the casing and is sealed by the sealing body. The casing is an bottomed cylinder to house the capacitor element therein, and for example made of aluminum. The sealing body is attached to an opening of the casing by a crimping process and seals the opening of the casing. Lead terminals are connected to the anode foil and the cathode foil, and external terminals are electrically connected to these connection terminals. The external terminal is lead out to the outside through a through hole of the sealing body.

(Sealing body)

The sealing body includes an elastomer member with elasticity to improve adhesion to the casing by a crimping process and to ensure insulation. The elastomer member contains an elastomer. The elastomer may be isobutylene isoprene rubber called butyl rubber, ethylene propylene diene rubber called EPDM, styrene butadiene rubber, isoprene rubber, fluorine rubber, acrylic rubber, and natural rubber. These elastomers may be produced by vulcanization such as resin vulcanization, peroxide vulcanization, sulfur vulcanization, quinoid vulcanization, and polyol vulcanization, and may be thermoplastic elastomers. One or two types or more elastomers may be used.

Vulcanizing agent may be benzoyl peroxide, dicumyl peroxide, 2,5-dimethyl-2,5-bis(t-butylperoxy)hexane, and alkyl phenol formaldehyde resin. Furthermore, a cross-linking accelerator may be zinc oxide, magnesium oxide, lead peroxide, dibenzothiazyl, disulfide, 1,2-polybutadiene, triallyl cyanurate methacrylic acid and acrylic acid metal salt, and N,N'-metaphenylenedimaleinoside ester stearate, etc. The initial cross-linking density of the elastomer can be adjusted by combining single or multiple vulcanizing agent and cross-linking accelerator and selecting them for each type of the elastomer.

The elastomer member may contain carbon and an inorganic filler, in addition to the elastomer. When the carbon and inorganic filler are added, the elastomer less likely cleaves and softening thereof is suppressed. The inorganic filler may be talc, mica, silica, kaolin, titania, alumina, and mixtures thereof, and talc and mica with flat shape are preferable. The inorganic filler with flat shape facilitates the cross-linking and is suitable for adjusting the cross-linking density.

In such elastomer members, the initial cross-linking density of the elastomer is adjusted to be $1.8 \times 10^{-3}$ mol/g or more. The initial cross-linking density is cross-linking density before the sealing body is exposed under high-temperature atmospheric environment for a long time. In detail, the initial cross-linking density includes the cross-linking density at the stage of manufacturing the sealing body and the cross-linking density at the stage of assembling the manufactured sealing body in the electrolytic capacitor. Furthermore, although the electrolytic capacitor is exposed under the high-temperature environment in the aging process and the reflow process, since these processes takes relatively short time of about few seconds to six hours at maximum, the cross-linking density does not largely change. The cross-linking density of the sealing body of the electrolytic capacitor after the aging process and the reflow process is also included in the initial cross-linking density. The cross-linking density is calculated by Flory-Rehner formula indicated by the below formula (1). Note that the volume v after swelling is measured after the elastomer is immersed in cyclohexane solution and is placed still in the dark under the room temperature of 20 to 25 °C for 72 hours.

(Formula 1)

$$n = \frac{-[\ln(1 - v_2) + v_2 + \chi v_2^2]}{V\left(v_2^{\frac{1}{3}} - \frac{v_2}{2}\right)} \qquad \cdots (1)$$

n: cross-linking density (mol/g)

$v_2 = v_0/v$

$v_0$: volume before swelling

v: volume after swelling

$\chi$ : interaction coeeficient between elastomer and cyclohexane

V: molecular volume (mol/mol)

Furthermore, the content of the elastomer relative to a total of the elastomer member is adjusted to 30 wt% or less. When the content of the elastomer relative to a total of the elastomer member is 30 wt% or less, the reduction over time in the cross-linking density is suppressed. Therefore, when the initial cross-linking density of the elastomer is $1.8 \times 10^{-3}$ mol/g or more and the content of the elastomer relative to a total of the elastomer member is 30 wt% or less, high cross-linking density is maintained for a long time. That is, when the cross-linking density is high, the cross-linking suppresses well the vibration of the elastomer due to thermal energy, and it becomes difficult for the elastomer to cleave. Then, when high cross-linking density is maintained fort a long time, the cleavage of the elastomer during that time advances slowly and the recombination of the elastomer advances slowly, and thus the shrinking of the sealing body advances slowly. That is, the thermal oxidative deterioration of the sealing body is suppressed.

Furthermore, when the elastomer is butyl rubber, it is preferable to select resin vulcanization for the vulcanization. When butyl rubber is resin-vulcanized, strong cross-linking structure is achieved, and the reduction of the cross-linking density can be suppressed.

The initial cross-linking density of the elastomer is preferably $2.5 \times 10^{-3}$ mol/g or more. When the initial cross-linking density is adjusted as high as $2.5 \times 10^{-3}$ mol/g or more, by adjusting the content of the elastomer relative to the total of the elastomer member to 30 wt% or less, the cleavage of the elastomer becomes further slower. That is, the softening of the elastomer member can be further suppressed. Furthermore, the content of the elastomer relative to the total of the elastomer member is preferably 27 wt% or less. When the content of the elastomer is 27 wt% or less, high cross-linking density is maintained for a long time, and the final softening of the elastomer member can be mildly reduced.

More preferably, the elastomer is isobutylene isoprene rubber that is also called butyl rubber. The electrolytic solution less permeates through the elastomer member containing butyl rubber, and the swelling of the elastomer member on the inner side of the casing is suppressed. Therefore, in the elastomer member containing butyl rubber, the difference between the volume of the sealing body on the outer side of the casing shrinking by thermal oxidative deterioration and the volume of the sealing body on the inner side of the casing swelling due to permeation of the electrolytic solution becomes small. Therefore, the cracks less likely occur in the elastomer member.

The sealing body may be provided by laminating a hard resin plate on the elastomer member or by including a hard resin plate in the elastomer member. The hard resin plate improves the sealing in the electrolytic capacitor and protects the elastomer member from the electrolytic solution and heat.

(Electrolytic Capacitor)

The electrolytic capacitor is produced by fitting the sealing body in an opening of the casing housing the capacitor element. The anode foil and the cathode foil of the electrolytic capacitor are foil bodies formed of valve acting metal. The valve action metal is aluminum, tantalum, niobium, niobium oxide, titanium, hafnium, zirconium, zinc, tungsten, bismuth, and antimony, etc. The purity of the anode foil is desirably 99.9% or more, and the purity of the cathode foil is desirably about 99% or more, however, impurities such as silicon, iron, copper, magnesium, and zinc may be included.

An enlarged surface layer with an enlarged surface structure is formed on one surface or both surface of the anode foil. The cathode foil may be plane foil without the enlarged surface structure, or may also have the enlarged surface structure like the anode foil. The enlarged surface layer is formed by tunnel-shaped pits, spongy pits, or air gaps between dense powder. The enlarged surface layer is formed by electrolytic etching, chemical etching, or sandblasting, and the like, or formed by vapor-depositing or sintering metal particles and the like, on a foil body.

Typically, dielectric oxide film of the anode foil is oxide film formed on a surface layer of the anode foil, and when the anode foil is formed of aluminum, it is aluminum oxide obtained by oxidizing the enlarged surface layer. This dielectric oxide film is formed by chemical conversion treatment in which voltage is applied solution without halogen ions. For example, the solution without halogen ions is aqueous solution of adipic acid, boric acid, or phosphoric acid, etc. Also, the oxide film may be naturally or intentionally formed on the surface layer of the cathode foil by this chemical conversion treatment.

A solvent of the electrolytic solution is not particularly limited, and a protic organic polar solvent or an aprotic organic polar solvent may be used. Typical protic polar solvent may be monohydric alcohol, polyhydric alcohol, oxyalcohol compounds, and water. Typical aprotic polar solvent may be sulfones, amides, lactones, cyclic amides, nitriles, and sulfoxides.

The monohydric alcohol may be ethanol, propanol, butanol, pentanol, hexanol, cyclobutanol, cyclopentanol, cyclohexanol, and benzyl alcohol, etc. Polyhydric alcohol and oxyalcohol compound may be ethylene glycol, propylene glycol, glycerin, methyl cellosolve, ethyl cellosolve, methoxypropylene glycol, dimethoxypropanol, and diethylene glycol etc.

The sulfone may be dimethyl sulfone, ethylmethyl sulfone, diethyl sulfone, sulfolane, 3-methyl sulfolane, and 2,4-dimethyl sulfolane, etc. The amide may be N-methylformamide, N,N-dimethylformamide, N-ethylformamide, N,N-diethylformamide, N-methylacetamide, N,N-dimethylacetamide, N-ethylacetamide, N,N-diethylacetamide, and hexamethylphosphoricamide, etc. The lactone and the cyclic amide may be $\gamma$-butyrolactone, $\gamma$-valerolactone, $\delta$-valerolactone, N-methyl-2-pyrrolidone, ethylene carbonate, propylene carbonate, butylene carbonate, and isobutylene carbonate, etc. The nitrile may be acetonitrile, 3-methoxypropionitrile, and glutaronitrile, etc. The sulfoxide may be dimethyl sulfoxide, etc.

The electrolytic solution may contain solutes. The solute contained in the electrolytic solution contains anion and cation components, and is typically organic acid or salt thereof, inorganic acid or salt thereof, or composite compounds of organic acid and inorganic acid or salt thereof, and may be used in single or in combination of two or more. Acid that is the anion and base that is the cation may be separately added to the electrolytic solution as solute components.

Organic acid may be carbxylic acid such as oxalic acid, succinic acid, glutaric acid, pimelic acid, suberic acid, sebacic acid, phthalic acid, isophthalic acid, terephthalic acid, maleic acid, adipic acid, benzoic acid, toluyl acid, enanthic acids, malonic acids, 1,6-decandicarboxylic acid, 1,7-octanedicarboxylic acid, azelaic acid, undecanedioic acid, dodecanedioic acid, and tridecanedioic acid, phenols, and sulfonic acid, etc. The inorganic acid may be boric acid, phosphoric acid, phosphorus acid, hypophosphorous acid, carbonic acid, and silicic acid, etc. The composite compound of organic acid and inorganic acid may be borodisalicylic acid, borodioxalic acid, and borodiglycolic acid.

The salt of the organic acid, the inorganic acid, and the composite compound of organic acid and inorganic acid may be ammonium salt, quaternary ammonium salt, quaternary amidinium salt, amine salt, sodium salt, and potassium salt, etc. Quaternary ammonium ions of the quaternary ammonium salt may be tetramethylammonium, triethylmethylammonium, and tetraethylammonium, etc. The quaternary amidinium salt may be ethyldimethylimidazolinium and tetramethylimidazolinium, etc. Amines in the amine salt may be primary amines, secondary amines, and tertiary amines. The primary amine may be methylamine, ethylamine, propylamine, and the like, the secondary amine may be dimethylamine, diethylamine, ethylmethylamine and dibutylamine, and the like, and the tertiary amine may be trimethylamine, triethylamine, tributylamine, ethyldimethylamine, ethyldiisopropylamine, and the like.

Furthermore, other additives may be added to the electrolytic solution. The additive may be polyethylene glycol, polypropyrene glycol, polyoxyethyleneglycerin, complex compounds of boric acid and polysaccharides (mannit, sorbit, etc.), complex compounds of boric acid and polyhydric alcohol, borate esters, nitro compounds, phosphate esters, and colloidal silica, etc. These may be used in single or in combination of two or more. The nitro compound suppresses an amount of hydrogen gas produced in the electrolytic capacitor. The nitro compound may be o-nitrobenzoic acid, m-nitrobenzoic acid, p-nitrobenzoic acid, o-nitrophenol, m-nitrophenol, and p-nitrophenol, etc.

When forming a gel electrolyte, a polymer holding such electrolytic solution is a monopolymer of a single monomer or a copolymer of two or more types of monomers, and is cross-linked to form three-dimensional network structure. The monomer is not particularly limited, and for example, one type or two or more types are selected from a group of hydroxyethylacrylamide, 2-(diethylamino)ethyl methacrylate, 2-(tert-butylamino)ethyl methacrylate, N -isopropylacrylamide, diacetoneacrylamide, N-tert-butylacrylamide, N,N-diethylacrylamide, N-vinylacetamide, 2-hydroxyethyl methacrylate, methacrylic acid, or methoxy polyethylene glycol methacrylate, etc.

When a solid electrolyte layer is used together, the solid electrolyte layer is a layer containing a conductive polymer. The conductive polymer is a conjugated polymer or a doped conjugated polymer. Known polymers may be used for the conjugated polymer without limitation. For example, the conjugated polymer may be polypyrrole, polythiophene, polyfuran, polyaniline, polyacetylene, polyphenylene, polyphenylenevinylene, polyacene, and polythiophenevinylene, etc. These conjugated polymers may be used in single or or in combination of two or more, and may further be a copolymer of two or more types of monomers.

Among the above-described conjugated polymers, conjugated polymers formed by polymerizing thiophene or derivatives thereof is preferable, and conjugated polymers in which 3,4-ethylenedioxythiophene (that is, 2,3-dihydrothieno[3,4-b][1,4]dioxin), 3-alkylthiophene, 3-alkoxythiophene, 3-alkyl-4-alkoxythiophene, 3,4-alkylthiophene, 3,4-alkoxythiophene, or derivatives thereof are polymerized are preferable. The thiophene derivatives may preferably be compounds selected from thiophene with substituents at 3-position and 4-position, and the 3-position and 4-position substituents of the thiophene ring may form a ring together with the 3-position and 4-position carbon. The number of carbon of alkyl and alkoxy groups is suitably from 1 to 16, and in particular, a polymer of 3,4-ethylenedioxythiophene called EDOT, that is, poly(3,4-ethylenedioxythiophene) called PEDOT is particularly preferable. Furthermore, an alkylated ethylenedioxythiophene in which an alkyl group is added to 3,4-ethylenedioxythiophene may be used, and for example, a methylated ethylenedioxythiophene (that is, 2-methyl-2,3-dihydro-thieno[3,4-b][1,4] dioxin), ethylated ethylenedioxythiophene (that is, 2-ethyl-2,3-dihydro-thieno[3,4-b][1,4] dioxin), and the like may be used.

As a dopant, known dopants may be used without limitation. For example, the dopant may be inorganic acid such as boric acid, nitric acid, and phosphoric acid, and organic acid such as acetic acid, oxalic acid, citric acid, ascot acid, tartaric acid, squaric acid, logisonic acid, croconic acid, salicylic acid, p-toluenesulfonic acid, 1,2-dihydroxy-3,5-benzenedisulfonic acid, methanesulfonic acid, trifluoromethanesulfonic acid, borodisalicylic acid, bisoxalate borate acid, sulfonylimide acid, dodecylbenzenesulfonic acid, propylnaphthalenesulfonic acid, and butylnaphthalenesulfonic acid, etc. Polyanions may be polyvinyl sulfonic acid, polystyrene sulfonic acid, polyallyl sulfonic acid, polyacrylic sulfonic acid, polymethacrylic sulfonic acid, poly(2-acrylamide-2-methylpropanesulfonic acid), polyisoprene sulfonic acid, polyacrylic acid, polymethacrylic acid, and polymaleic acid, etc.

Representatively, the conductive polymer may be poly(3,4-ethylenedioxythiophene), which is called PEDOT, doped with polystyrene sulfonic acid (PSS).

The solid electrolyte layer is formed by immersing the capacitor element in dispersion formed by dispersing the conductive polymer in the solvent, and drying the capacitor element. The anode foil, the cathode foil, and the separator may be immersed in the dispersion separately before being assembled, or the dispersion may be applied dropwise or may be applied by spraying.

The separator includes cellulose such as kraft, Manila hemp, esparto, hemp, rayon, and mixed papers thereof, polyester resin such as polyethylene terephthalate, polybutylene terephthalate, polyethylene naphthalate, and derivatives thereof, polytetrafluoroethylene resin, polyvinylidene fluoride resin, vinylon resin, polyamide resin such as aliphatic polyamide, semi-aromatic polyamide, and total aromatic polyamide, polyimide resin, polyethylene resin, polypropylene resin, trimethylpentene resin, polyphenylene sulfide resin, acrylic resin, polyvinyl alcohol resin and the like, and the resin may be used in single or in combination.

The long lifetime of the electrolytic capacitor is achieved when the shrinking of the sealing body is slow and the thermal oxidative deterioration of the sealing body is suppressed for a long time. That is, since the transpiration of the electrolytic solution to the outside of the through the sealing body is suppressed, the deterioration over time of the capacitance of the electrolytic capacitor and the dissipation factor (tan δ) is reduced.

Furthermore, since the reduction suppression effect for the cross-linking density makes the shrinking of the elastomer member slow and suppresses the thermal oxidative deterioration, oxygen is prevented from entering into the electrolytic capacitor from the outside. Therefore, when the electrolytic capacitor is a so-called hybrid type which has the electrolytic solution ad the solid electrolyte layer, the oxidative deterioration of the conductive polymer can be suppressed. That is, the deterioration over time of the capacitance and the dissipation factor (tan δ) due to the oxidative deterioration of the conductive polymer can be reduced, and this hybrid type electrolytic capacitor can achieve particularly ling lifetime.

Hereinafter, the sealing body and the electrolytic capacitor of the present disclosure will be described in more detail based on the examples. Note that the present disclosure is not limited to the following examples.

(Examples 1 and 2 and Comparative Examples 1 and 2)

Sealing bodies of the examples 1 and 2 and the comparative examples 1 to 2 were produced. Each sealing body had only the elastomer member. The elastomer member was produced by mixing butyl rubber polymer, carbon, and alkyl phenol aldehyde resin as the inorganic filler and vulcanizing agent, and then performing cross-linking by resin vulcanization. The examples 1 and 2 and the comparative example 2 used talc as the inorganic filler. The comparative examples 1 used clay as the inorganic filler. Furthermore, in the sealing bodies of the examples 1 and 2 and the comparative examples 1 to 2, stearic acid, zinc oxide, and silane coupling agent were mixed as the remaining composition.

As shown in the below table 1, the sealing bodies of the examples 1 and 2 and the comparative examples 1 to 2 were produced by adjusting the composition ratio of butyl rubber polymer, carbon, and the inorganic filler, and adjusting the cross-linking density. Each composition ratio was relative to the total weight of the elastomer member.

[Table 1]

|  | Example 1 | Example 2 | Comparative Example 1 | Comparative Example 2 |
|---|---|---|---|---|
| Butyl Rubber Polymer (wt%) | 30 | 27 | 33 | 32 |
| Carbon (wt%) | 15 | 19 | 17 | 16 |
| Inorganic Filler (wt%) | 45 | 41 | 43 | 41 |

(continued)

|  | Example 1 | Example 2 | Comparative Example 1 | Comparative Example 2 |
|---|---|---|---|---|
| Vulcanization | Resin Vulcanization | Resin Vulcanization | Resin Vulcanization | Resin Vulcanization |
| Cross-Linking Density ($\times 10^{-3}$ mol/g) | 1.8 | 2.5 | 1.1 | 2.2 |

To calculate the cross-linking density, the elastomer members of each example and comparative example with approximately 2 mm in thickness, 1cm $\times$ 1cm in size, and approximately 0.3 g per one test piece in weight were produced. For the elastomer member, the volume V0 of the elastomer member before swelling was calculated from the initial weight and specific gravity. The elastomer member was put in the cyclohexane solution of 15 ml and was placed still in the dark under the room temperature of 20 to 25 °C for 72 hours. After this placing still was completed, the weight of the elastomer member after swelling was measured. After the measurement, the elastomer member was dried under the vacuum environment at 100 °C for 1 hour to remove cyclohexane.

The volume of cyclohexane impregnated in the elastomer member was calculated from the weight of the elastomer member after drying and after swelling. The volume of the elastomer member after swelling was calculated from the volume of cyclohexane, and the volume of the elastomer member and the volume of cyclohexane was added to calculate the volume v after swelling. Note that the molecular weight of cyclohexane was 84.16 g/mol, the density of cyclohexane was 0.78 g/cm3, and the interaction coefficient x between butyl rubber polymer and cyclohexane was 0.44 in the calculation.

(Change in Physical Properties after Thermal Aging)

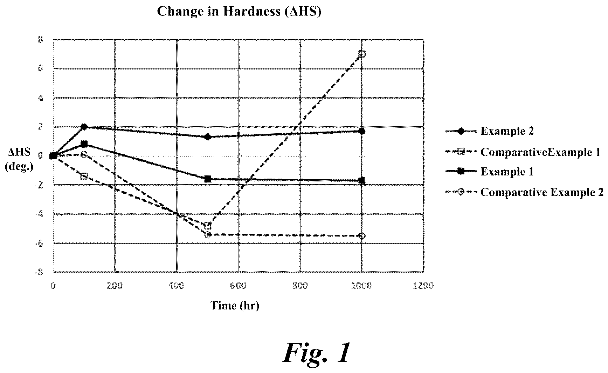

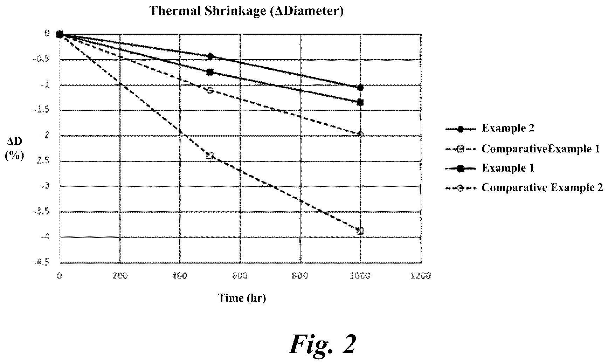

The thermal oxidative deterioration of the sealing bodies of the examples 1 and 2 and the comparative examples 1 to 2 were observed. That is, the sealing bodies of each example and comparative example were exposed under the air atmosphere of 150 °C. Then, the change ($\Delta$HS) in hardness and the thermal shrinkage ($\Delta$diameter) after each time of continuous exposure under the air atmosphere of 150 °C were measured. The result of the change in hardness is shown in the below Table 2, and the result of the thermal shrinkage is shown in the below Table 3. Furthermore, based on the below table 2, Fig. 1 shows a graph in which the horizontal axis indicates the time elapsed and the vertical axis indicates the change in hardness, and based on the below table 3, Fig. 2 shows a graph in which the horizontal axis indicates the time elapsed and the vertical axis indicates the thermal shrinkage.

[Table 2]

| Change in Hardness ($\Delta$HS) | | | | |
|---|---|---|---|---|
| Time (h) | Example 1 | Example 2 | Comparative Example 1 | Comparative Example 2 |
| 0 | 0 | 0 | 0 | 0 |
| 100 | 0.8 | 2 | -1.4 | 0.1 |
| 500 | -1.6 | 1.3 | -4.8 | -5.4 |
| 1000 | -1.7 | 1.7 | 7 | -5.5 |

[Table 3]

| Thermal shrinkage ($\Delta$D) | | | | |
|---|---|---|---|---|
| Time (h) | Example 1 | Example 2 | Comparative Example 1 | Comparative Example 2 |
| 0 | 0 | 0 | 0 | 0 |
| 100 | -0.7 | -0.4 | -2.4 | -1.1 |
| 500 | -1.3 | -1.1 | -3.9 | -2.0 |

As shown in the table 2 and Fig. 1, in the comparative examples 1 and 2, the softening advanced to about -5 after 500 hours had elapsed. In contrast, the softening in the example 1 was kept at about - 1.7 after 1000 hours had elapsed, and further softening did not occur. From these, it was observed that, the cleavage of the elastomer advanced much in the sealing bodies of the comparative examples 1 and 2, and the cleavage of the elastomer in the sealing body of the example 1 was suppressed. Furthermore, in the example 2, the change in hardness was a positive value, meaning that the cleavage of the elastomer is suppressed to the level the change in hardness was not apparent.

In addition, as shown in the table 3 and Fig. 2, it was found that the thermal shrinkage of the sealing bodies of the examples 1 and 2 is larger than the thermal shrinkage of the sealing bodies of the comparative examples 1 and 2. Note that, the sealing body of the comparative example 1 cracked after 2000 hours had elapsed. By combining the tables 2 and 3 and Figs. 1 and 2, it was found that, in the examples 1 and 2, since the cleavage of the elastomer is suppressed, the vaporized elastomer is few, the recombination of the elastomer with short chain was few, and the shrinking of the sealing body was suppressed.

(Change in Cross-Linking Density)

Here, the cross-linking density of the comparative example 2 was higher than the cross-linking density of the example 1. However, the softening is more suppressed in the example 1 than the comparative example 2, and as a result, the thermal shrinkage of the example 1 is suppressed. Accordingly, the change in the cross-linking density of the example 1 and the comparative example 1 was measured. That is, the sealing bodies of each example and comparative example were exposed under the temperature environment of 150 °C, and the cross-linking density before exposed under the temperature environment and the cross-linking density after exposed under the temperature environment for 500 hours and 1000 hours were measured to calculate the change rate of the cross-linking density. The results are shown in Table 4.

[Table 4]

| | Initial | After 500 Hours | | After 1000 Hours | |
|---|---|---|---|---|---|
| | Cross-Linking Density ($\times 10^{-3}$mol/g) | Cross-Linking Density ($\times 10^{-3}$mol/g) | Change Rate (%) | Cross-Linking Density ($\times 10^{-3}$mol/g) | Change Rate (%) |
| Example 1 | 1.8 | 0.8 | -57 | 0.5 | -70 |
| Example 2 | 2.5 | 1.4 | -42 | 0.9 | -62 |
| Comparative Example 2 | 2.2 | 0.7 | -69 | 0.4 | -81 |

As shown in the table 4, in the comparative example 2 in which the initial cross-linking density was higher than the example 1, the cross-linking density significantly decreased below the cross-linking density of the example 1 after 500 hours. By this, it was observed that, since the sealing body of the comparative example 2 did not maintain high cross-linking density for a long time and the cross-linking density decreased quickly, that is since the cleavage of the elastomer was suppressed only for a short time and was aggressively, the shrinking of the comparative example 2 was larger than the example 1.

The difference between the example 1 and the comparative example 2 was the content ratio of elastomer relative to the elastomer member. In other word, it was observed that, by not only making the initial cross-linking density of the elastomer to be $1.8 \times 10^{-3}$ mol/g or more like the comparative example 2, but also making the content of the elastomer relative to the total of the elastomer member to be 30 wt% or less like the examples 1 and 2, the change in cross-linking density became slow, the cleavage of the elastomer was suppressed, and the shrinking of the elastomer member was suppressed. That is, the thermal oxidative deterioration of the sealing body was suppressed.

Note that, it was observed that, as indicated in the example 2, when the content of the elastomer relative to the total of the elastomer member to be 27 wt% or less, the change in cross-linking density was further suppressed, and when the initial cross-linking density of the elastomer was $2.5 \times 10^{-3}$ mol/g or more, the softening was hardly observed and the shrinking was most excellently suppressed.

(Examples 3 and 4 and Comparative Examples 3)

The electrolytic capacitors of the example 3 and 4 and the comparative example 3 were produced using the sealing bodies of the examples 1 and 2 and the comparative example 2. These electrolytic capacitors were so-called hybrid type in which the electrolytic solution and the solid electrolyte layer were used together.

In the electrolytic capacitors of the examples 3 and 4 and the comparative example 3, the anode foil and the cathode foil were aluminum foil, and the surface thereof was enlarged by etching and the oxide film was formed thereon by chemical conversion treatment. In the chemical conversion treatment, voltage was applied in the aqueous solution of adipic acid. The oxide film of the anode foil was the dielectric oxide film of the electrolytic capacitor.

The anode foil and the cathode foil were each connected to lead wire and were wound to face each other via a cellulose separator. The capacitor element was immersed in aqueous solution of ammonium dihydrogen phosphate of the same concentration for 10 minutes to perform restorative conversion.

Next, the dispersion of polyethylene dioxythiophene (PEDOT/PSS) doped with polystyrene sulfonic acid of the same product was prepared as the conductive polymer. The capacitor element was immersed in the dispersion, was pulled out and was dried at 150 °C for 30 minutes. By this, the solid electrolyte layer was formed on the capacitor element.

Ethylene glycol was selected as the solvent of the electrolytic solution. Furthermore, ammonium azelaate that is ion-dissociative salt was selected as the solute of the electrolytic solution. The solvent and the solute were mixed at the ratio of 5 wt% of ammonium azelaate relative to the electrolytic solution. The capacitor element on which the solid electrolyte had been formed was immersed in the electrolytic solution to impregnate the electrolytic solution in the capacitor element.

Then, the capacitor elements were housed in the aluminum casings with the same dimension and shape. In the electrolytic capacitor of the example 3, the opened end of the aluminum casing was attached with the sealing body of the example 1 and was sealed by a crimping process. The electrolytic capacitor of the example 4 was attached with the sealing body of the example 2 and was sealed by a crimping process. The electrolytic capacitor of the comparative example 3 was attached with the sealing body of the comparative example 2 and was sealed by a crimping process.

Note that, the lead wire drawn out from the capacitor element was drawn out from the sealing body so that the element can be conducted. Voltage was applied for 45 minutes under the temperature environment of 115 °C, and aging was performed on each solid electrolytic capacitor. The size of the capacitor element of respective electrolytic capacitor was 6.3 mm in diameter and 5.8 mm in height, and each electrolytic capacitor had the rated withstand voltage of 35 WV and the capacity of 47 μF.

The solid electrolytic capacitors of the examples 3 and 4 and the comparative example 2 were exposed under the high-temperature environment of 170 °C. Then, the dissipation factor (tan δ), the capacitance (Cap), and the electrolytic solution loss (Δwt) of the electrolytic capacitor before exposed under the high-temperature environment, and after exposed under the high-temperature environment for 1200 hours were measured. Furthermore, a decrease rate (ΔCap) of the capacitance after 2000 hours had elapsed relative to the capacitance of before exposed under the high-temperature environment was measured.

The measurement result and the calculation result are shown in the below table 5.

[Table 5]

| | Initial | 170°C, After 1200 Hours | | |
|---|---|---|---|---|
| | tan δ | ΔCap (%) | tan δ | ΔWt (mg) |
| Example 3 | 0.02 | -17.0 | 0.07 | -35.5 |
| Example 4 | 0.02 | -11.4 | 0.04 | -33.1 |
| Comparative Example 3 | 0.02 | -40.0 | 0.13 | -38.5 |

As shown in the table 5, the initial properties of the electrolytic capacitors of the examples 3 and 4 and the comparative example 3 were the same. However, when the electrolytic capacitors were exposed under the high-temperature environment of 170 °C, the properties varied between the group of the examples 3 and 4 and the comparative example 3. That is, after 1200 hours, the electrolytic solution loss Δwt from the electrolytic capacitors of the examples 3 and 4 were smaller than the comparative example 3. Furthermore, after 1200 hours, the reduction in Cap and the deterioration of tan δ of the electrolytic capacitors of the examples 3 and 4 was suppressed more than the comparative example 3.

When the shrinking of the elastomer was slow and the thermal oxidative deterioration of the sealing body was suppressed for a long time, transpiration of the electrolytic solution to the outside of the electrolytic capacitor through the sealing body was suppressed. Then, the deterioration over time of the capacitance of the electrolytic capacitor and the dissipation factor (tan δ) were reduced. Furthermore, it was observed that, the oxidative deterioration of the conductive polymer was also suppressed, the deterioration over time of the capacitance and the dissipation factor (tan δ) due to the oxidative deterioration of the conductive polymer was reduced.

**Claims**

1. A sealing body comprising an elastomer member containing an elastomer,
   wherein an initial cross-linking density of the elastomer is $1.8 \times 10^{-3}$ mol/g or more, and a content of the elastomer relative to a total of the elastomer member is 30 wt% or less.

2.  The sealing body according to claim 1, wherein the initial cross-linking density of the elastomer may be $2.5\times10^{-3}$ mol/g or more.

3.  The sealing body according to claim 1 or 2, wherein the elastomer member contains carbon and an inorganic filler.

4.  The sealing body according to claim 3, wherein the inorganic filler includes a flat inorganic filler.

5.  The sealing body according to claim 4, wherein the flat inorganic filler is talc, mica, or both.

6.  The sealing body according to any one of claims 1 to 5, wherein the elastomer is resin cross-linked.

7.  The sealing body according to any one of claims 1 to 6, wherein the elastomer is butyl rubber.

8.  The sealing body according to any one of claims 1 to 7, wherein a change rate of the cross-linking density when exposed under a temperature environment of 150 °C for 500 hours is within -60% relative to the initial cross-linking density.

9.  The sealing body according to any one of claims 1 to 8, wherein a change in hardness when exposed under the temperature environment of 150 °C for 1000 hours is within -2 relative to initial hardness.

10.  An electrolytic capacitor comprising:

    the sealing body according to any one of claims 1 to 9,
    a casing sealed by the sealing body, and
    a capacitor element which is housed in the casing, has anode foil and cathode foil with dielectric oxide film facing each other, and is impregnated with electrolytic solution.

11.  The electrolytic capacitor according to claim 10, further comprising a solid electrolyte layer containing a conductive polymer and formed in the capacitor element.

**Change in Hardness (ΔHS)**

*Fig. 1*

**Thermal Shrinkage (ΔDiameter)**

Fig. 2

## INTERNATIONAL SEARCH REPORT

International application No.

**PCT/JP2023/005296**

### A. CLASSIFICATION OF SUBJECT MATTER

*H01G 9/10*(2006.01)i; *H01G 2/10*(2006.01)i
FI:   H01G9/10 E; H01G2/10 301

According to International Patent Classification (IPC) or to both national classification and IPC

### B. FIELDS SEARCHED

Minimum documentation searched (classification system followed by classification symbols)

H01G9/10; H01G2/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 59-080925 A (TOURITSU KOGYO KK) 10 May 1984 (1984-05-10)<br>claims, p. 2, upper right column, line 9 to p. 3, upper right column, line 17 | 1-11 |
| A | JP 2020-088329 A (PANASONIC IP MAN CORP) 04 June 2020 (2020-06-04)<br>entire text, all drawings | 1-11 |
| A | JP 2010-232449 A (NIPPON CHEMICON CORP) 14 October 2010 (2010-10-14)<br>entire text, all drawings | 1-11 |
| A | WO 2020/149384 A1 (DENKA COMPANY LTD) 23 July 2020 (2020-07-23)<br>entire text, all drawings | 1-11 |
| A | WO 2019/035431 A1 (HITACHI CHEMICAL CO LTD) 21 February 2019 (2019-02-21)<br>entire text, all drawings | 1-11 |

☐ Further documents are listed in the continuation of Box C.    ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **20 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/005296**

| Patent document cited in search report | | | Publication date (day/month/year) | Patent family member(s) | | | Publication date (day/month/year) |
|---|---|---|---|---|---|---|---|
| JP | 59-080925 | A | 10 May 1984 | (Family: none) | | | |
| JP | 2020-088329 | A | 04 June 2020 | US entire text, all drawings CN | 2020/0176195 111261412 | A1 A | |
| JP | 2010-232449 | A | 14 October 2010 | (Family: none) | | | |
| WO | 2020/149384 | A1 | 23 July 2020 | CN entire text, all drawings KR | 113227169 10-2021-0114412 | A A | |
| WO | 2019/035431 | A1 | 21 February 2019 | CN entire text, all drawings | 111032780 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59080925 A

- JP H05283302 A